# EUROPEAN PATENT APPLICATION

(11) **EP 2 210 824 A1**
(43) Date of publication of application: **28.07.2010**
(21) Application number: 09151103.0
(22) Date of filing: 22.01.2009
(51) Int. Cl.: B65D 83/04, A47G 19/32, G01F 11/24

(54) **A dispenser and an assembly of dispensers**

(71) Applicant: Zafe Systems ApS, 5800 Nyborg (DK)
(72) Inventor: Lorenzen, Palle, 5800 Nyborg (DK)
(74) Representative: Inspicos A/S

(57) **Abstract**

A dispenser (10) comprising a closed container (20) for holding a product in units, bits, slices or the like and a dispensing element (30) comprising a rotatable element (34) with a number of fins (38). Rotation of the rotatable element (34) dispenses product. The fins (38) are bendable or made of bristles in order to not crush or mill the product during dispensing. A number of the dispensers (10) may be fixed to a rack (50).

## Description

The present invention relates to a single use dispenser and in particular to a dispenser especially adapted to dispense units of a foodstuff or snack. In addition, the invention relates to an assembly of such dispensers, primarily for use by many users, such as in supermarkets, restaurants or the like.

Dispensers may have a plurality of shapes, but most larger dispensers are adapted to be re-filled, whereby a number of issues arise as to the hygiene of the products as well as the quality and/or traceability of the product in the dispenser compared to a label thereof. The present invention relates to a solution to these problems.

In a first aspect, the invention relates to a dispenser for dispensing a non-liquid product, the dispenser comprising:
- a container for holding the product prior to dispensing,
- a dispensing element engageable by a user to dispense product from the container,
- the container being permanently closed, and the dispensing element being inseparable from the container.

In this context, dispensing is the outputting or ejecting of a metered amount of the product. This metering may be more or less precise, depending on the actual embodiment.

The present product is a non-liquid product and preferably divided into or naturally provided as units, grains, seeds, slices, lumps, or the like. Particular problems arise when metering products which are not easily flowable or which are not dividable into very small elements that are easily handled in dispensers. Preferably, the mean size of the individual elements or parts of the product are at least 1mm, such as at least 2mm, preferably at least 3 mm, such as at least 4 mm, such as at least 5 mm, preferably at least 7mm, such as at least 10 mm along a longest dimension. Also a shortest dimension of the product is of interest, and this may be 0.5 mm or more, such as 1 or 2 mm or more.

Products of this type may be whole nuts, pieces/slabs of dried fruit, coated fruits, coffee beans, spices, sweets, popcorn, cereals, tea leaves, dried fruits/vegetables, seeds or the like. Products of this type have a relatively large extension at least in one direction and therefore will present problems when attempting to dispense them without crushing, milling or cutting them unnecessarily and without blocking the operation of the dispenser.

In the present context, the container is permanently closed, which means that the container is not adapted to be opened and easily re-sealed. Preferably, opening of the container will destroy this or render it use-less, or at least render the tampering visible to the owner and customer.

In this context, the dispensing element is, if not provided monolichically there with, permanently fixed to the container, such as by gluing, welding, snap locks or the like.

The engagement of the user for dispensing may be a rotation, pulling, pushing, translating or any combination thereof of e.g. a movable element of the dispensing element.

In one embodiment, the dispenser further comprises an information providing element fixed thereto or therein, the element being adapted to provide information relating to the product.

This information providing element may be a label permanently fixed to the container, such as a label made of a material or with a glue which is not removable without leaving residue to evidence this. Alternatively, the information provider may be providing the information directly in the material of the container, the providing of the label inside the container (which is permanently closed) or the fixing of another element to the container from which the information may be derived, such as a computer chip, an RFID element or the like.

In this manner, the user now is ensured of the identity, quality and the like of the product, and the hygiene of the product is ensured as the container is permanently closed, so that refilling or other tampering with the contents of the container is impossible or at least visible if having taken place.

In a preferred embodiment, the dispensing element comprises a rotatable part having a central part and a plurality of fins extending from the central part, the rotatable part being positioned between an inner space of the container and the surroundings, the dispensing element having a part engageable by the user for rotating the rotatable part. Then, the engaging of the element may bring about a rotation of the rotatable part which will then perform the dispensing.

In this situation, dispensing may be obtained by rotating the rotatable part which may operate in the same manner as a revolving door. The product will move into the volume between adjacent fins and be moved from inside the container to an output opening and then dispensed. Preferably, the container, dispensing element and rotating element are positioned and rotated in a manner so that product transport from inside the container to the surroundings is directed at least partly downwardly so that gravity may assist in the transport.

Thus, the axis of rotation of the rotatable element preferably is different from vertical.

Preferably, the fins have at least substantially the same outer contour in order for them to travel the same contour when rotating.

In this situation, the container may have a flat, or only gently curved, first inner surface part, and wherein the dispensing element has a first opening facing the interior of the container and a second opening facing the surroundings, the dispensing element having, between the first and second openings, a second, inner surface part corresponding to the first inner surface part, the second inner surface part not having any steep edge parts directed toward an inside of the dispensing element.

In this context, a gently curved surface is a surface which has no steep steps or parts, such as where no parts deviate with an angle of more than 30 degrees or more, such as 40 degrees or more, in relation to a general or average plane of the surface.

In this context, the correspondence is preferably seen in relation to gravity and the movement of product inside the container and the dispensing element. In this situation, the first surface part and the second surface part are adapted to or intended to be positioned at the bottom or lowest, so that the product, and especially any last parts thereof, will move along these surface parts in an at least substantially unobstructed manner. Steep edges will have a tendency of retaining product and producing waste.

A steep edge part may be a part extending into the dispensing element with an angle of more than 30 degrees, such as more than 45 degrees, in relation to a general plane of the second surface part of the dispensing element. One manner of identifying the first and second surface part is from a vertical cross section through the container/dispensing element. From this cross section, the first and second surface parts will preferably represent the lower, inner surface of the container and the dispensing element, respectively.

It is also preferred that any edge parts deviating more than 5 degrees, such as more than 10 degrees, preferably more than 30 degrees, are no longer than half, such as no longer than a third, preferably no longer than a fourth of a longest dimension of the product or a unit or entity thereof and/or no longer than the shortest dimension, no longer than half this shortest dimension, or no longer than a quarter of this shortest dimension of the product. In this manner, the produce may rather easily move over such an edge part.

Naturally, the angle of the edge part in relation to horizontal is of interest, when the dispenser is in the desired position and angle for use. In this situation, the edge parts preferably point downward (in the direction toward the dispensing element) by 5 degrees or more, such as 15 degrees or more in relation to horizontal.

A preferred embodiment is directed to the desire of taking care of the product while dispensing it. In this situation, it is preferred that the fins are adapted to bend at least 1mm, such as at least 5mm or at least 10mm, when exposed to a force, directed at an angle perpendicular to a plane of the fin, of in the interval of 1.5-15N, such as 1.5-8N, preferably 2-6N, such as 2-4N.

In this respect, the bending of interest need not be the bending of all of the outer circumference of the fin, as a product normally will engage the fin at a relatively limited area, so that the bending may be that of a small area or part, such as 1, 2, 3 or even 5mm of the circumference of the fin, when engaged at that position, while other parts of the fin then may bend less or not at all. Normally, a monolithic fin of a soft material will, if engaged at a certain point, bend the most at that position and relatively less away from that position.

Naturally, the degree of required bending will depend on the dimensions of the product to dispense. If the product is walnuts, a rather large bending may be desired compared to when dispensing tea leaves.

In addition, the force required to bend the fin will depend on the actual product to be dispensed, as the bendability or hardness of the fins may be adapted to the product to be dispensed. The main problem is seen when a unit of the product is wedged between the housing and a fin. In this situation, it is desired to have the fin give way instead of crushing/severing/cutting the unit in two. On the other hand, the fins should be sufficiently strong to actually move and control the units. Also, the fins should be strong enough to prevent unintended release of product by deformation of the fins.

Thus, the fins may be composite elements having, at their outer ends, a lower strength or a softer material while having at more central parts or inside the softer material a stronger material facilitating the movement and control of the product to be dispensed.

Alternatively, the bending of the fin may be provided by providing a hinge or hinge-like part thereof, such as a position with a reduction of fin thickness, hardness/stiffness or the like. This hinge may be provided at the centre of the rotatable element or relatively close to the outer circumference of the fin.

Preferably, the fins comprise a material having a Shore A hardness of 25-150, such as 30-100, preferably 45-90, such as 60-85, such as 70-85. This material may form the overall fins or may be used for providing at least outer edges of the fins.

An interesting alternative is the replacement of the fins, which normally will be solid elements through which no material may pass, with fins of the shape of multiple elements, even in the shape of brushes or bristles, which may be much softer, especially when engaged locally. Such fins may be especially well suited for very brittle or weak products, such as cereals and popcorn. Dispensing these using relatively soft brushes will bring about a gentle dispensing with no or limited crushing of the product.

Another aspect of the invention relates to a rack structure and a plurality of dispensers according to the first aspect of the invention, the dispensers being fixed to the rack structure.

In this situation, each dispenser may be fixed in a position so that the dispensing element is positioned downwardly in relation to the container in order to have gravity at least take part in the product transport.

As mentioned above, it is preferred that no parts of the lowest surfaces (e.g. seen in a vertical cross section through the container and dispensing element) have an angle of less than 5, 10 or 15 degrees from vertical - directed downward in the direction of the dispensing element.

Especially when the dispensing element has a part engageable by the user, each dispenser is preferably fixed in a position so that the engageable part is directed away from the rack structure in order for it to be readily available to the user.

In the following a preferred embodiment is described with reference to the drawing, wherein:
- figure 1 illustrates a dispenser according to the invention,
- figure 2 illustrates the container of the dispenser of Fig. 1,
- figure 3 illustrates a housing of the dispensing element of the dispenser of Fig. 1,
- figure 4 illustrates a rotatable element of the dispenser of Fig. 1,
- figure 5 illustrates an operatable element of the dispenser of Fig. 1, and
- figure 6 illustrates a number of dispensers in a rack system.

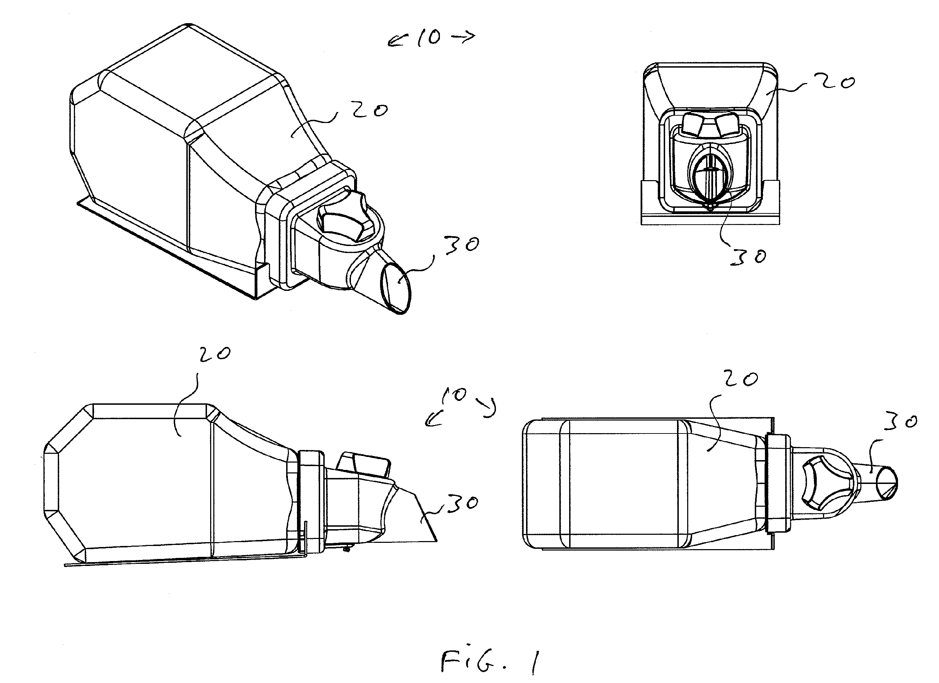

In figure 1, a dispenser 10 is seen having a container 20 for holding a product and a dispensing element 30 for dispensing the product.

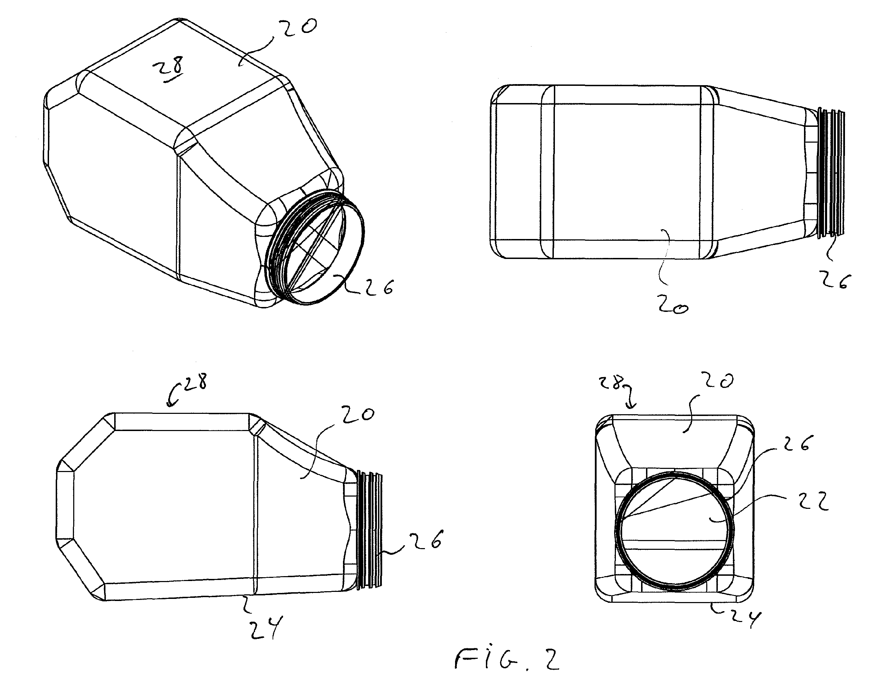

In Figure 2, the container 20 is seen both from the side and in cross sections. The container has an inner space 22, a flat, lower side 24 and a circular connecting neck 26 for connection to the dispensing element 30.

In addition, the container 20 has, preferably on a side portion 28 opposite to the lower side 24, a label or other element providing information relating to the product in the space 22. When the dispensing element 30 is permanently fixed to the container 20, the label information will then with certainty relate to the product inside, which gives an increased degree of certainty to the consumer. In addition, as refilling of the container 20 is not possible or at least difficult, hygiene is ensured to the consumer, especially as the dispensing is obtained by the consumer rotating an external element so that consumers are not able to contact the product itself at any time before dispensing.

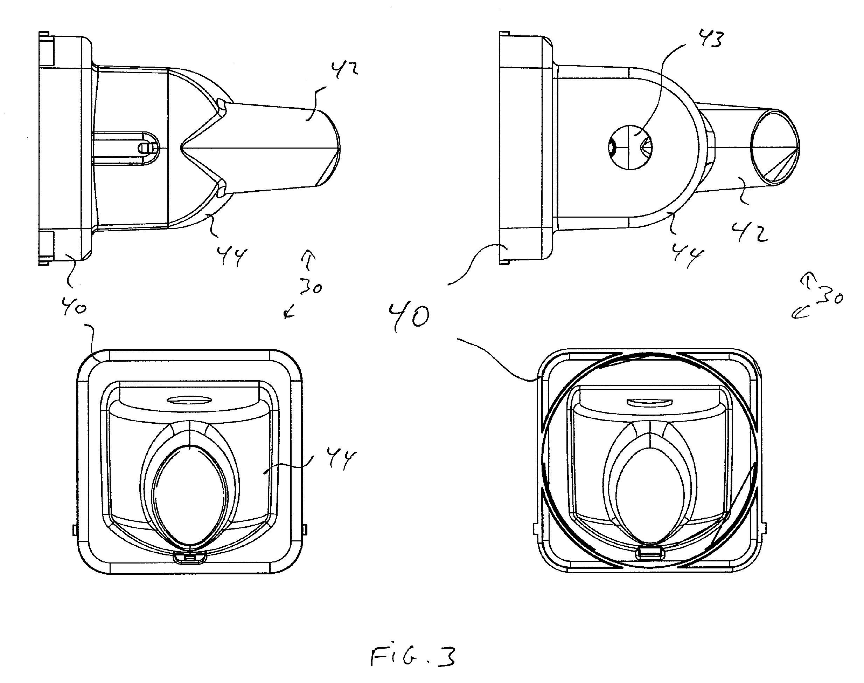

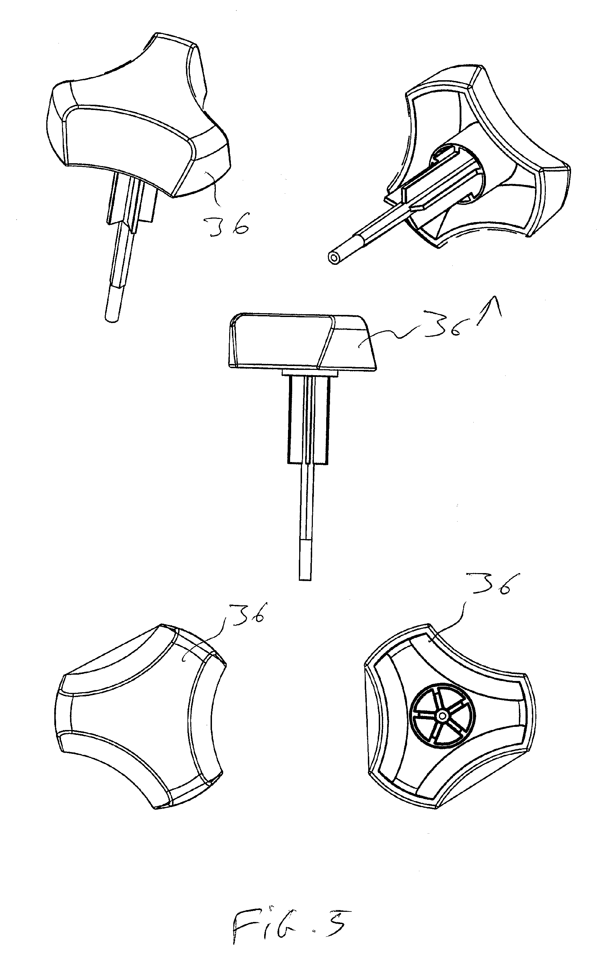

The dispensing element 30 is illustrated in figures 3-5 and comprises a housing 32, a rotatable element 34, which has a number of fins 38, and a knob 36 for rotating the element 34. From the figures, it is seen that the knob 36 has an extended portion adapted to extend into a central portion of the rotatable element 34 and engage this to a degree so that rotation and dispensing is possible.

The housing 32 has an element 40 for fixing the housing 32 to the container 20 as well as a mouth portion 42 from which dispensed product exits and may be fed into e.g. a bag or other container. Also, an opening 43 is provided for receiving a part of the knob 36 engaging the rotatable element 34.

The housing 32 has a part 44, the inner side of which defines part of a circle in order to provide a closing effect together with the fins 38 during rotation over a predetermined angular interval. In this manner, the number of fins 38 and the housing part 44 will interact to ensure that at no angular position of the rotatable element 34 will enable free flow of product from the space 22 to the mouth 42. The fewer the fins 38, the longer the angular interval covered by the part 44.

The overall operation of the dispenser 10 is that the user rotates the knob 36, which facilitates rotation of the rotatable element 34 so as to lead product from the space 22 to the mouth 42.

Depending on the actual product to be dispensed, the fins 38 have different properties in order to be able to dispense the product without locking due to product being locked between a fin and the housing 42, and without excessive breaking or milling of the product. Naturally, the dispensing of nuts and cereals will be different, and a rotatable element adapted to gently handle cereals may be too soft for handling nuts, and fins strong enough to dispense nuts may be so rigid that cereals may be crushed, milled or broken instead of dispensed gently.

The overall problem is seen when product is positioned between a fin 38 and the part 44, while rotating the fin 38. As it is not desired to break the product, the fin 38 - or alternatively the part 44 - should be sufficiently soft to not break the product but move over the product while leaving it generally intact and have the next fin 38 bring the stuck product with it for dispensing.

It has been found that the fins preferably bends at least 10mm when exposed to a force, directed at an angle perpendicular to a plane of the fin, of in the interval of 1.5-15N.

This effect may be obtained in a number of manners, and by optimizing or selecting one or more of a number of parameters, such as the hardness of the fin 38 or a material thereof, a thickness of the fin 38, a length of the fin from a central portion or anchoring portion thereof to the fins outer circumference.

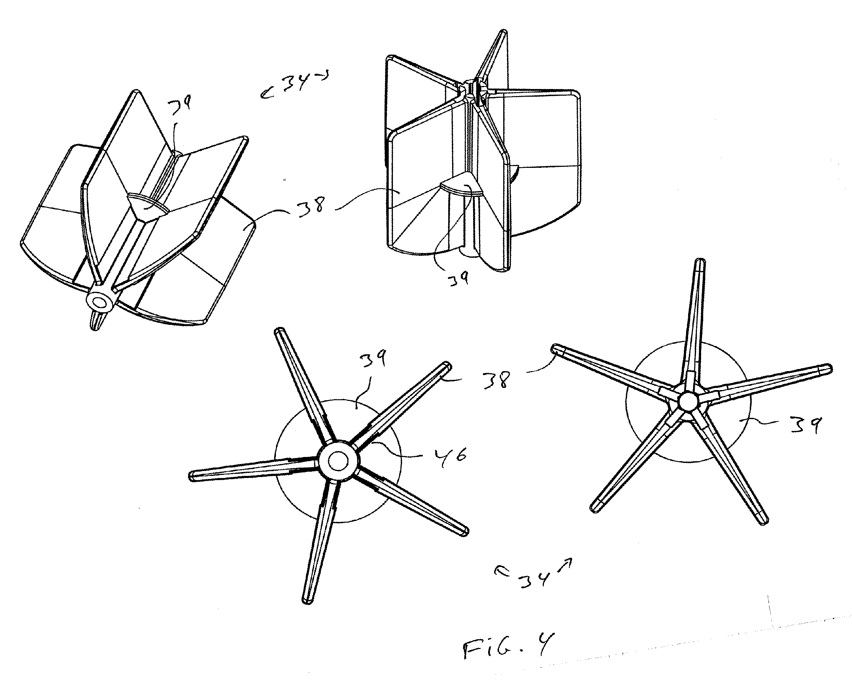

Also, as is illustrated in figure 4, an element 39 extending from the central portion and along and between the fins 38 may be provided for providing the fins 38 with additional stiffness. Such an element 39 will provide a more local stiffness increase, along the axis of the central element and axis of rotation.

As mentioned above, the required or desired bending need not be of the whole outer circumference of the fin but may be a much smaller part thereof, such as 1, 2, 3 or 5 mm thereof, the remainder of the outer circumference may be allowed to bend less or not at all.

Preferably, the above bending is experienced at all outer parts of the fins 38. Naturally, parts positioned close to the central element will be stiffer and thereby bend less. However, these are normally not exposed to the blocking problem to the degree as the parts the farthest from the central portion.

As seen in figure 4, the desired stiffness of a fin 38 may also be obtained by reducing the thickness thereof at e.g. a position 46 close to the central portion. In this manner, a hinge portion 46 may be formed.

Another important dimension or size is the volume and internal dimensions of the space between two neighbouring fins 38 in that this space should be sufficiently large to hold the product to be dispensed. If the product, e.g., is nuts, this space should be large enough to hold at least one nut. Preferably, this space is large enough to hold a plurality of the nuts.

In order to avoid or minimize waste in the dispenser 10 and space 22, the lower side 24 preferably is flat or at least gently curved so that no product is withheld in the container 20 during operation. The flat surface 24 will ensure that all the product is moved toward the neck portion 26, as the desired angle of the container 20 during operation is with the neck portion 26 pointing partly downward.

It is seen that the adaptation of the round neck 26 to the sqare-ish shape of the container 20 gives a small, upwardly extending portion inside the neck 26, but this portion is kept as small as possible, and it may be removed by using a square-shaped neck portion 26 or a more rounded lower surface 24.

In addition thereto, the housing 32 has a corresponding, lower side which also has no upwardly extending, steep angles. It is seen in the cross section that two minor upwardly extending parts 32' exist. These are not required and may be removed if desired, so that a fully "flat" lower surface is obtained. It is seen that the presently desired shape of the housing 32 is circular along the direction of dispensing. This makes the lower surface of the housing 32 circular in the plane perpendicular to the direction of the mouth 42, which is no problem in that the curvature is sufficiently large in relation to the size of the product and in that no steep parts are seen.

Presently, the container 20 is made of PET, the housing 32 is made of PP (poly propylene), and the fins are made of TPE with a Shore A hardness of about 85, which brings about a bending of on the order of 14mm when exposed to a force of 6N. This type of rotatable element 34 is suitable for the dispensing of nuts, coffee beans, tea leaves, dried food/fruits or the like.

If e.g. cereals or more fragile products are to be dispensed, a higher bendability is desired, which may be obtained using a softer material and/or thinner fins and/or longer fins or even fins that are split or cut into a plurality of smaller units, such as bristles or brushes, in which manner a more gentle handling is obtained. Replacing the fins with brushes will provide a more gentle dispensing but also less strong fins which may not or need not be able to withstand the pressure of hard, heavy products. Such fins may be preferable for dispensing cereals, popcorn, snacks or the like.

Any number of fins may be used. The number of fins will determine a minimum rotational angle covered by the housing, if it is desired that no angular position exists where product may unhindered travel past the, non-moving, rotatable element. Presently, 5-9 fins are preferred.

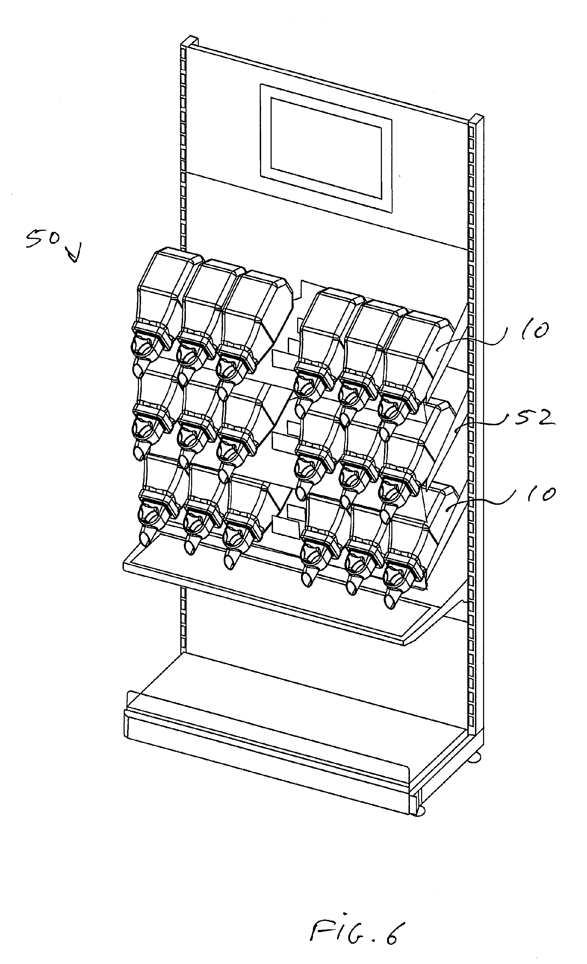

In figure 6, a rack system 50 is seen in which a number of dispensers 10 are fixed to a frame 52. It is seen that the dispensers 10 are mounted with the mouth 42 pointing downwards so that gravity will ensure that the product dispensed will enter a bag or the like positioned below or around the mouth 42.

Preferably, the dispensers are removably fixed, at their back sides 24, to the rack 52 so that operation is possible with the knob 36 available at the front side and without release from the rack 52 and to that replacement is possible.

## Claims

1. A dispenser for dispensing a non-liquid product, the dispenser comprising:
- a container for holding the product prior to dispensing,
- a dispensing element engageable by a user to dispense product from the container,
- the container being permanently closed, and the dispensing element being inseparable from the container.

2. A dispenser according to claim 1, the dispenser further comprising an information providing element fixed thereto or therein, the element being adapted to provide information relating to the product.

3. A dispenser according to claim 1 or 2, wherein the dispensing element comprises a rotatable part having a central part and a plurality of fins extending from the central part, the rotatable part being positioned between an inner space of the container and the surroundings, the dispensing element having a part engageable by the user for rotating the rotatable part.

4. A dispenser according to claim 3, wherein the container has a flat or only gently curved first inner surface part, and wherein the dispensing element has a first opening facing the interior of the container and a second opening facing the surroundings, the dispensing element having, between the first and second openings, a second, inner surface part corresponding to the first, inner surface part, the second inner surface part not having any steep edge parts directed toward an inside of the dispensing element.

5. A dispenser according to claim 3 or 4, wherein the fins are adapted to bend at least 10mm when exposed to a force, directed at an angle perpendicular to a plane of the fin, of in the interval of 1.5-15N.

6. A dispenser according to any of claims 3-5, wherein the fins comprise a material having a Shore A hardness of 20-150.

7. An assembly comprising a rack structure and a plurality of dispensers according to any of the preceding claims, the dispensers being fixed to the rack structure.

8. An assembly according to claim 7, wherein each dispenser is fixed in a position so that the dispensing element is positioned downwardly in relation to the container.

9. An assembly according to claim 3 and claim 7 or 8, wherein each dispenser is fixed in a position so that the engageable part is directed away from the rack structure.

## Amended claims

### Amended claims in accordance with Rule 137(2) EPC.

**1.** A dispenser for dispensing a non-liquid product, the dispenser comprising:
- a container for holding the product prior to dispensing,
- a dispensing element engageable by a user to dispense product from the container, the dispensing element comprises a rotatable part having a central part and a plurality of fins extending from the central part, the rotatable part being positioned between an inner space of the container and the surroundings, the dispensing element having a part engageable by the user for rotating the rotatable part.
- the container being permanently closed, and the dispensing element being inseparable from the container,
wherein the fins comprise a material having a Shore A hardness of 20- 150.

**2.** A dispenser according to claim 1, the dispenser further comprising an information providing element fixed thereto or therein, the element being adapted to provide information relating to the product.

**3.** A dispenser according to claim 1 , wherein the container has a flat or only gently curved first inner surface part, and wherein the dispensing element has a first opening facing the interior of the container and a second opening facing the surroundings, the dispensing element having, between the first and second openings, a second, inner surface part corresponding to the first, inner surface part, the second inner surface part not having any steep edge parts directed toward an inside of the dispensing element.

**4.** A dispenser according to claim 1 or 3, wherein the fins are adapted to bend at least 10mm when exposed to a force, directed at an angle perpendicular to a plane of the fin, of in the interval of 1.5-15N.

**5.** A dispenser according to claim 1,wherein the fins may are composite elements having, at their outer ends, the material having a Shore A hardness of 20-150 and, at more central parts or inside the material having a Shore A hardness of 20-150, a stronger material facilitating the movement and control of the product to be dispensed.

**6.** An assembly comprising a rack structure and a plurality of dispensers according to any of the preceding claims, the dispensers being fixed to the rack structure.

**7.** An assembly according to claim 6, wherein each dispenser is fixed in a position so that the dispensing element is positioned downwardly in relation to the container.

**8.** An assembly according to claim 1 and claim 6 or 7, wherein each dispenser is fixed in a position so that the engageable part is directed away from the rack structure.
